Europäisches Patentamt

European Patent Office

Office européen des brevets

(11) Publication number: **0 033 795**
**B1**

## (12) EUROPEAN PATENT SPECIFICATION

(45) Date of publication of patent specification: **23.05.84**

(21) Application number: **80300550.3**

(22) Date of filing: **26.02.80**

(51) Int. Cl.³: **C 05 D 1/00**

(54) A method of fertilising plants.

(30) Priority: **06.02.80 GB 8003945**

(43) Date of publication of application:
**19.08.81 Bulletin 81/33**

(45) Publication of the grant of the patent:
**23.05.84 Bulletin 84/21**

(84) Designated Contracting States:
**AT BE CH DE FR GB IT LU NL SE**

(56) References cited:
**DE-A-1 592 817**
**DE-B-1 252 212**
**US-A-1 338 734**
**US-A-1 377 601**
**US-A-1 408 169**

(73) Proprietor: **LIQUID CRYSTALS LIMITED**
**2 McCrone Mews Belsize Lane**
**London NW3 5BG (GB)**

(72) Inventor: **Bowie, Stanley Hay Umphray**
**18 Spencer Road**
**North Wembley Middlesex HAO 3SF (GB)**

(74) Representative: **Daley, Michael John et al**
**F.J. CLEVELAND & COMPANY 40/43 Chancery Lane**
**London, WC2A 1JQ (GB)**

Courier Press, Leamington Spa, England.

## Description

This invention relates to the nutrition of plants and has for an objective the provision of an improved plant nutrient or fertiliser hereinafter referred to as a fertiliser.

We have found that the mineral adularia which may be defined as a potassium feldspar formed at a low temperature, is an effective fertiliser providing potassium for the plants. The adulaira is applied to the soil in fine particulate form so as to make the potash in the adularia available to the plants.

More specifically we propose as a fertiliser adularia shale which is naturally occurring, for example in N.W. Scotland. This adularia shale contains 45—50 per cent adularia (potassium-aluminium silicate) and has a potash content of between 10 and 12 per cent by weight.

It is believed that the effectiveness of the adularia shale as a fertiliser, when applied in finely ground pulverised form, stems from the low temperature of formation and the fact that the crystal size of the adularia is very small averaging 50 $\mu$m in diameter. Adularia differs markedly from feldspares containing potash that are formed at high temperatures and which occur in igneous rocks and pegmatites. High temperature feldspares usually form large crystals. The adularias primarily envisaged are formed following sedimentation but metamorphosed adularias are not excluded provided that their low temperature characteristics are retained.

The surface area resulting from the small size of the crystals, together with their partial liberation by fine grinding typically for 100% to pass 1/8 inch (3,175 mm) mesh and 25% to pass 100 B.S.S. (British Standard Sieve) which is 150 $\mu$m, makes the potash available to plants despite its water-insoluble silicate form.

The potassium salts normally used as fertilisers are water soluble and hitherto this solubility has been considered essential. The water-insolubility of adularia is, however, an advantageous rather than an adverse feature because the new fertiliser should not be removed in run-off water and should therefore remain active for some years. The exact mechanism of the surprising uptake of water-insoluble potash by plants is not fully understood but it is believed that the potash is taken in through the root hairs possibly after having been set free by acids and active hydrogen ions produced by the plant. Soil is known to retain potassium better if calcium and magnesium are also present and this enhances the value of the naturally occurring adularia shale which contains between 0.5 and 6 per cent by weight CaO and 1.5 to 5 per cent by weight MgO.

Tests carried out on adularia shale naturally occurring at Skaig Bridge, Loch Assynt, Sutherland (Map Reference NC 235 244) taken and then finely ground showed the following results during the 1979 growing season:—

Approximate analysis of adularia shale from Skaig Bridge

| | Wt. % |
|---|---|
| $SiO_2$ | 52 |
| $Al_2O_3$ | 12 |
| $Fe_2O_3$ | 3 |
| CaO | 6 |
| MgO | 5 |
| $Na_2O$ | 0.3 |
| $K_2O$ | 10 |
| $P_2O_5$ | 0.3 |
| $CO_2+H_2O$ | 12 |
| | 100.6 |

| | % increase |
|---|---|
| Potatoes, new ground, adularia shale 2 ton/acre, (5 tonne/hectare), | 20 |
| Grass dressed at 1 ton/acre (2.5 tonne/hectare) in addition to a 20:10:10 fertiliser at 2 cwt/acre (0.25 tonne/hectare) | 20 |
| Ryegrass/clover dressed at 1 ton/acre (2.5 tonne/hectare) in addition to a 11:21:21 fertiliser at 2 cwt/acre (0.25 tonne/hectare) | 10 |

Analyses of the potatoes showed an uptake of between 64 and 70 per cent more potash on the ground dressed with adularia shale as compared with adjacent untreated ground. Grass showed at 28 per cent increase in uptake on one farm and 3.6 on another farm, in this case for the second crop of grass. This gives proof, in the instances tested, not only of a substantial increased yield, but also provides evidence that potash is taken up both in the case of herbage and root crops.

Another useful adularia shale is dolomitic in character some of the potassium, aluminium and silicon being replaced by calcium and magnesium; such a shale contains 22—45% by weight adularia (8—10% $K_2O$), 6—12% by weight CaO and 5—9% by weight MgO. This dolomitic shale is found adjacent to the adularia shale and has the aproximate analysis:—

Approximate composition of dolomitic adularia shale

| | Wt. % |
|---|---|
| $SiO_2$ | 39 |
| $Al_2O_3$ | 11 |
| $Fe_2O_3$ | 4 |
| CaO | 12 |
| MgO | 8 |
| $K_2O$ | 8 |
| $CO_2+H_2O$ | 18 |
| | 100 |

## Claims

1. A method of fertilising plants which comprises applying to the media in which the plants grow the mineral adularia in the form of particles sufficiently fine to make the potash in the adularia available to the plants.

2. A method as claimed in Claim 1 wherein the adularia is applied as a component of a naturally occurring shale.

3. A method as claimed in either Claim 1 or Claim 2 wherein the shale contains calcium and magnesium.

4. A method as claimed in either Claim 2 or Claim 3 wherein the shale is ground to pass 1/8 inch (3.175 mm) mesh.

## Patentansprüche

1. Verfahren zum Düngen von Pflanzen, welches dadurch gekennzeichnet ist, daß de Medium, in welche die Pflanzen wachsen, das Mineral Adular in Form von Partikeln zugeführt wird, die hinreichend fein sind, um den Pflanzen die Pottasche in dem Adular zugänglich zu machen.

2. Verfahren nach Anspruch 1, bei welchem das Adular als Bestandteil eines natürlich auftretenden Schiefergesteins zugeführt wird.

3. Verfahren nach entweder Anspruch 1 oder Anspruch 2, bei welchem das Schiefergestein Kalzium und Magnesium enthält.

4. Verfahren nach entweder Anspruch 2 oder Anspruch 3, bei welchem das Schiefergestein so gemahlen ist, daß es durch eine Siebweite von 1/8 Zoll (3,175 mm) hindruchgeht.

## Revendications

1. Procédé de production d'un engrais pour plantes qui consiste à appliquer aux milieux dans lesquels les plantes poussent de l'adulaire minérale sous forme de particules suffisamment fines pour rendre la potasse présente dans l'adulaire accessible aux plantes.

2. Procédé selon la revendication 1, caractérisé en ce que l'adulaire est applique en tant que constituant d'une argile naturelle.

3. Procédé selon l'une quelconque des revendications 1 ou 2, caractérisé en ce que l'argile contient du calcium et du magnésium.

4. Procédé selon l'une quelconque des revendications 2 ou 3, caractérisé en ce que l'argile est broyée de façon à traverser un tamis de 3,175 mm d'ouverture de maille.